# EUROPEAN PATENT APPLICATION

(11) **EP 4 548 734 A1**
(43) Date of publication of application: **07.05.2025**
(21) Application number: 23831081.7
(22) Date of filing: 13.06.2023
(51) Int. Cl.: A01B 59/06

(54) **WORK DEVICE DIAGNOSIS SYSTEM, AGRICULTURAL MACHINE, AGRICULTURAL WORK ASSISTANCE SYSTEM**

(30) Priority: 29.06.2022 JP 2022104926
(71) Applicant: KUBOTA CORPORATION, Osaka-shi, Osaka 556-8601 (JP)
(72) Inventor: NISHIKAWA, Takeshi, Sakai-shi, Osaka 590-0908 (JP)
(74) Representative: Cabinet Beau de Loménie
(86) International application number: PCT/JP2023/021907
(87) International publication number: WO 2024/004633

(57) **Abstract**

A working implement diagnostic system (11) includes a weight sensor (17) to detect the weight of a working implement (2) connected to a traveling machine body (3) of an agricultural machine (1) that travels in an agricultural field (H), and a controller (12) to diagnose the working implement based on a change in the weight of the working implement. An agricultural machine includes a working implement diagnostic system, a traveling machine body, and a connector (8) to connect a working implement to the traveling machine body. An agricultural work support system (100) includes the working implement diagnostic system, an agricultural machine, and a management server (20) including a database (21) that is accessible from outside. The agricultural machine further includes a communicator (18) to wirelessly communicate with the management server. The controller transmits a result of diagnosing the working implement to the management server via the communicator. The management server receives the result of diagnosing the working implement and stores the diagnosis result in the database.

## Description

### Technical Field

The present invention relates to a technique to perform agricultural work using a working implement connected to an agricultural machine while the agricultural machine is operated to travel in an agricultural field.

### Background Art

For example, PTLs 1 and 2 each disclose a technique to perform agricultural work using a working implement connected to an agricultural machine while the agricultural machine is operated to travel in an agricultural field. In PTL 1, a controller installed in a tractor measures a weight of a working implement (working machine) based on a traction load of the working implement detected by a load sensor and identifies a type of the working implement based on the weight. When the working implement is a rotary cultivator, the controller evaluates the degree of wear of cultivation claws based on sensor values from a PTO rotation sensor and a cultivation depth sensor. In the PTL 2, when the type of final work performed by the working implement (working machine) is any of sowing, fertilization, or chemical spreading, which consume materials, a consumption calculator provided in a management server calculates the material consumption based on changes in the weight of the working implement detected by a weight sensor installed in a tractor and estimates the type of materials from the consumption.

### Citation List

### Patent Literature

PTL 1: Japanese Unexamined Patent Application Publication No. 2022-35638
PTL 2: Japanese Unexamined Patent Application Publication No. 2021-87361

### Summary of Invention

### Technical Problem

For example, to prevent faults of working implements and agricultural machines and ensure proper agricultural work, there is a demand to detect conditions of a working implement for proper maintenance. Using sensors to detect conditions of a working implement is common. However, for example as illustrated in PTL 1, if sensors are provided to correspond to respective target conditions of a working implement, the number of components increases, leading to more components requiring maintenance, higher costs, and other problems.

In view of the above problems, an object of the present invention is to detect conditions of a working implement with a simple configuration.

### Solution to Problem

The technical means of the present invention for addressing the above technical problems are characterized by the following features.

A working implement diagnostic system according to an aspect of the present invention includes a weight sensor to detect a weight of a working implement that performs ground work, the working implement being connected to a traveling machine body of an agricultural machine that travels in an agricultural field, and a controller to diagnose the working implement based on a change in the weight of the working implement detected by the weight sensor.

The controller may be configured or programmed to diagnose, based on the change in the weight of the working implement, a condition of the working implement about work thereby and/or operation thereof.

The controller may be configured or programmed to diagnose, based on a result of comparing the change in the weight of the working implement with a diagnostic criterion for a diagnostic target item corresponding to a type of the working implement, the condition of the working implement about work thereby and/or operation thereof related to the diagnostic target item.

The controller may be configured or programmed to execute a determination of whether a change trend of the weight of the working implement meets a predetermined trend of the diagnostic criterion, and diagnose, based on a result of the determination, whether the condition of the working implement related to the diagnostic target item is acceptable or unacceptable.

The controller may be configured or programmed to calculate a difference between the weight of the working implement before performing the ground work and the weight of the working implement after performing the ground work, and diagnose, based on a result of comparing the difference with a predetermined value included in the diagnostic criteria, whether the condition of the working implement related to the diagnostic target items is acceptable or unacceptable.

The controller may be configured or programmed to, when the working implement is a type of working implement that performs cultivation or soil preparation in the agricultural field, diagnose a soil adhesion state of the working implement.

The controller may be configured or programmed to, when the working implement is a type of working implement that performs a type of work that consumes a material loaded thereon or therein, diagnose whether the condition of the working implement about work thereby and/or operation thereof is acceptable or unacceptable.

The controller may be configured or programmed to set, as a post-work weight, the weight of the working implement detected by the weight sensor when the working implement is stopped away from the soil after the end of the ground work, and detect a change between the post-work weight and the weight of the working implement before performing the ground work.

The working implement diagnostic system may include the working implement and a display to display a result of diagnosing the working implement from the controller.

The controller may be configured or programmed to cause the display to display the change in the weight of the working implement, and, when diagnosing the condition of the working implement as unacceptable, cause the display to display an alert.

The working implement diagnostic system may include a memory or a storage to store a result of diagnosing the working implement from the controller.

An agricultural machine according to an aspect of the present invention includes the working implement diagnostic system, a traveling machine body to travel in an agricultural field, and a connector to connect a working implement to the traveling machine body.

An agricultural work support system according to an aspect of the present invention includes the working implement diagnostic system, an agricultural machine equipped with the working implement diagnostic system, and a management server including a database that is accessible from outside. The agricultural machine includes a traveling machine body to travel in an agricultural field, a connector to connect a working implement to the traveling machine body, and a communicator to wirelessly communicate with the management server. The controller included in the working implement diagnostic system is configured or programmed to transmit a result of diagnosing the working implement to the management server via the communicator. The management server is configured or programmed to receive the result of diagnosing the working implement, and store the result in the database.

### Advantageous Effects of Invention

According to the present invention, the conditions of the working implement can be detected with a simple configuration.

### Brief Description of Drawings

[FIG. 1] FIG. 1 illustrates an electrical configuration of a working implement diagnostic system, an agricultural machine, and an agricultural work support system.
[FIG. 2A] FIG. 2A is a flowchart illustrating an example of a diagnostic operation of the working implement diagnostic system.
[FIG. 2B] FIG. 2B is a flowchart illustrating the details of step S20 in FIG. 2A.
[FIG. 2C] FIG. 2C is a flowchart illustrating the details of step S30 in FIG. 2A.
[FIG. 3] FIG. 3 is a graph illustrating an example of weight change in a cultivation/soil preparation-class working implement.
[FIG. 4] FIG. 4 is a graph illustrating an example of weight change in a spreading/planting-class working implement.
[FIG. 5] FIG. 5 presents an example of a relationship between a type of working implement, the diagnostic target item, and the diagnostic criteria.
[FIG. 6] FIG. 6 is a side view of the agricultural machine.
[FIG. 7A] FIG. 7A is a side view of the agricultural machine with a cultivator (working implement) connected thereto, illustrating the cultivator raised.
[FIG. 7B] FIG. 7B is a side view of the agricultural machine with the cultivator connected thereto, illustrating the cultivator lowered.
[FIG. 8] FIG. 8 is a side view of the agricultural machine with a spreader (working implement) connected thereto.

### Description of Embodiments

Hereinafter, an embodiment of the present invention will be described with reference to the drawings.

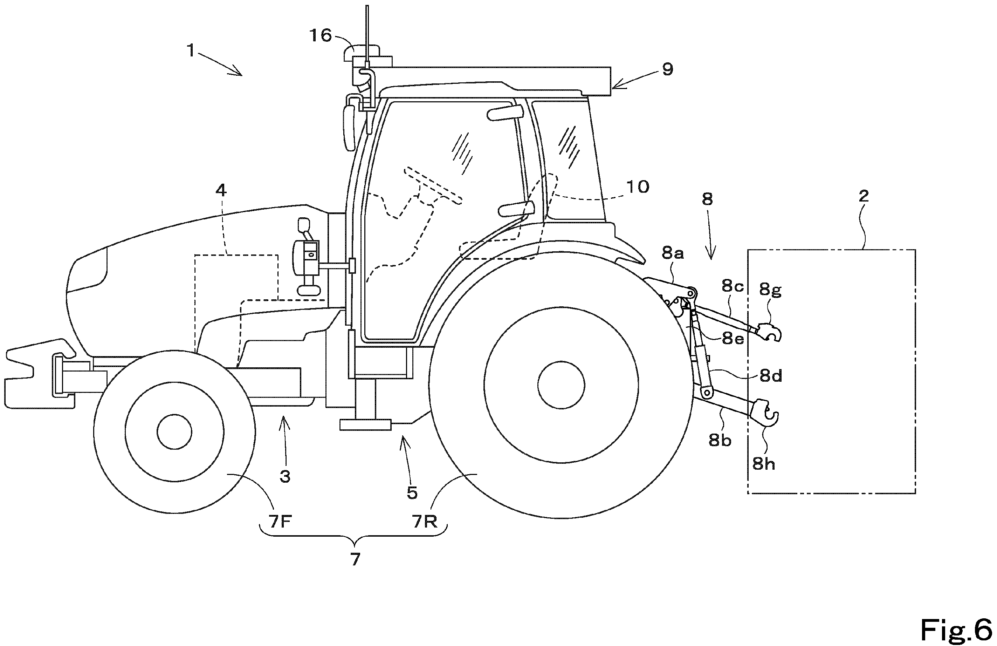

FIG. 6 is a side view of an agricultural machine 1. The agricultural machine 1 is a tractor. However, the agricultural machine of the present invention is not limited to a tractor, and may be, for example, another type of agricultural machine such as a rice transplanter or a combine, or may be another type of working vehicle other than tractors that perform agricultural work.

The agricultural machine 1 includes a traveling machine body 3, a prime mover 4, a transmission 5, a traveling device 7, and a connector 8. The traveling machine body 3 is supported by the traveling device 7 in a manner that enables travelling. A front wheel 7F and a rear wheel 7R provided in the traveling device 7 are tire-type wheels in the present embodiment. Alternatively, the front wheel 7F and the rear wheel 7R may be provided with, for example, crawlers (travelling tracks).

A cabin 9 is provided on top of the traveling machine body 3. An operator's seat 10 is provided inside the cabin 9. In FIG. 6, the front of the traveling machine body 3 is on the left, and the rear of the traveling machine body 3 is on the right. In FIG. 6, the right side of the traveling machine body 3 is on the far side, and the left side of the traveling machine body 3 is on the near side.

The traveling machine body 3 is provided at a front portion thereof with the prime mover 4. The prime mover 4 may be, for example, a diesel engine or electric motor. In the present embodiment, the prime mover 4 is a diesel engine.

The transmission 5 is provided at the center portion of the traveling machine body 3. The transmission 5 is capable of changing the propelling force of the traveling device 7 by switching between multiple speed stages and also shifting between forward and reverse movement of the traveling device 7. The driving force of the prime mover 4 is transmitted to the traveling device 7 via the transmission 5 to drive the traveling device 7, thereby causing the traveling machine body 3 to travel forward or backward.

The connector 8 such as a three-point linkage is provided at the rear of the traveling machine body 3. The connector 8 connects a working implement 2, which performs ground work, to the traveling machine body 3. Specifically, the working implement 2 and the traveling machine body 3 (the agricultural machine 1) are connected by connecting the working implement 2 to couplers 8g and 8h included in the connector 8, allowing the traveling machine body 3 to pull the working implement 2.

The connector 8 also defines a raising/lowering device to raise and lower the working implement 2. Specifically, the connector 8 includes a pair of lift arms 8a, lower links 8b, top links 8c, lift rods 8d, and lift cylinders 8e, arranged on the left and right. The lift arms 8a are supported at the upper rear of the transmission 5 in a manner that enables the lift arms 8a to swing up and down. The lift arms 8a swing when driven by the lift cylinders 8e. The lift cylinders 8e are hydraulic cylinders. The lower links 8b are supported at the lower rear of the transmission 5 in a manner that enables the lower links 8b to swing up and down. The top links 8c are supported at the rear of the transmission 5, positioned higher than the lower links 8b, in a manner that enables the top links 8c to swing up and down. The lower links 8b and the top links 8c are provided at tip portions (the rear end portions in FIG. 6) thereof with the couplers 8g and 8h connectable to the working implement 2. The lift rods 8d connect the lift arms 8a to the lower links 8b.

As the lift cylinders 8e extend and retract, the lift arms 8a move up and down, and the lower links 8b connected to the lift arms 8a via the lift rods 8d also move up and down. As a result, the working implement 2 moves up and down, using the front end portions (opposite to the couplers 8g and 8h) of the lower links 8b as fulcrums.

Multiple types of working implement 2 can be connected to the traveling machine body 3 via the connector 8. Examples of the working implement 2 include cultivators (rotary cultivators) for performing cultivation on agricultural fields, shallow tillage machines (stubble cultivators) for performing shallow tillage, ridgers for forming ridges, soil disturbance machines (drive harrows) for performing soil disturbance, spreaders for spreading, for example, fertilizer or pesticide, transplanters for transplanting seedlings, and sowing machines for sowing seeds.

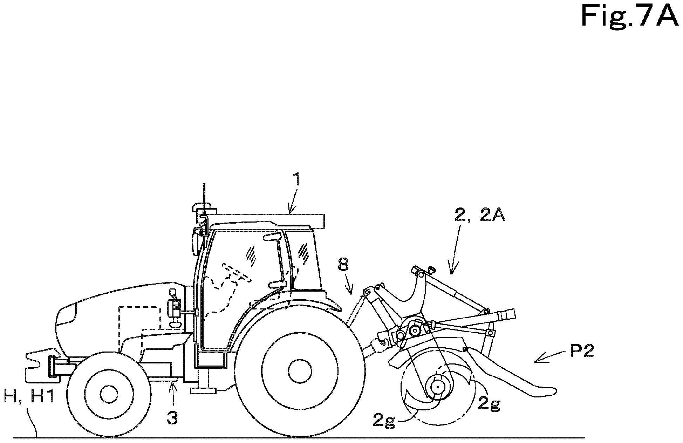

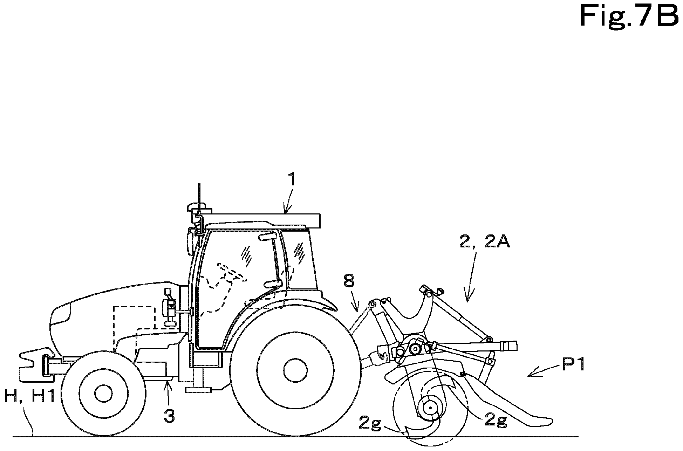

FIGS. 7A and 7B are side views of the agricultural machine 1 with a cultivator 2A (the working implement 2) connected to the traveling machine body 3 of the agricultural machine 1. Specifically, FIG. 7A illustrates the state in which the cultivator 2A connected to the traveling machine body 3 by the connector 8 is positioned in a raised position P2, and FIG. 7B illustrates the state in which the cultivator 2A connected to the traveling machine body 3 by the connector 8 is positioned in a lowered position P1.

As illustrated in FIG. 7A, when the cultivator 2A is positioned in the raised position P2, cultivation claws 2g provided in the cultivator 2A are away from soil H1 in an agricultural field H. This means that the raised position P2 of the cultivator 2A is a non-working position in which cultivation cannot be performed. As illustrated in FIG. 7B, when the cultivator 2A is positioned in the lowered position P1, the cultivation claws 2g can contact the soil H1. Cultivation can be performed. This means that the lowered position P1 of the cultivator 2A is a working position in which cultivation can be performed.

When, instead of the cultivator 2A, a working implement 2 for performing cultivation or soil preparation, such as a shallow tillage machine, ridger, or soil disturbance machine, is connected to the traveling machine body 3 via the connector 8, as illustrated in FIGS. 7A and 7B, a ground work member (for example, the cultivation claws 2g) of the working implement 2 is raised and lowered by the connector 8, allowing the ground-working member to move away from or contact the soil H1.

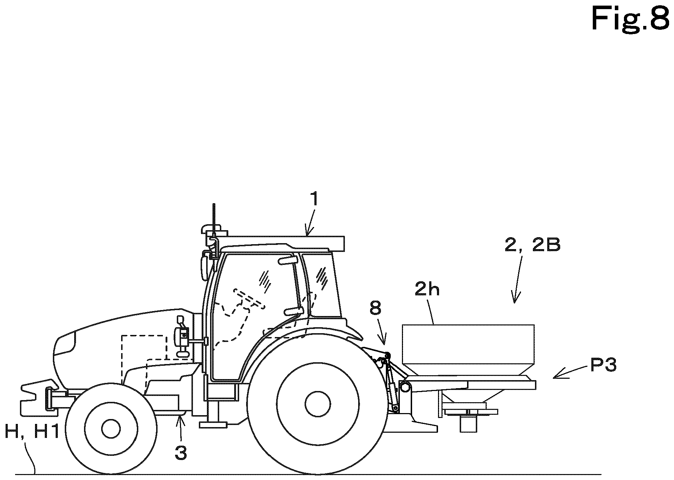

FIG. 8 is a side view of the agricultural machine 1 with a spreader 2B (the working implement 2) connected to the traveling machine body 3 of the agricultural machine 1. The spreader 2B is positioned by the connector 8 in a raised position P3, away from the soil H1, both when spreading for spreading material (fertilizers, chemicals, or other materials) stored (loaded) in a hopper 2h across the agricultural field H is performed and when spreading is not performed. As the spreader 2B performs spreading, the material stored in the hopper of the spreader 2B is consumed.

When, instead of the spreader 2B, a working implement 2 for performing a type of ground work that consumes materials (for example, planting of seedlings (material) or sowing of seeds (materials)), such as a transplanter or sowing machine, is connected to the traveling machine body 3 by the connector 8, the working implement 2 is positioned in the raised position P3 by the connector 8, as illustrated in FIG. 8.

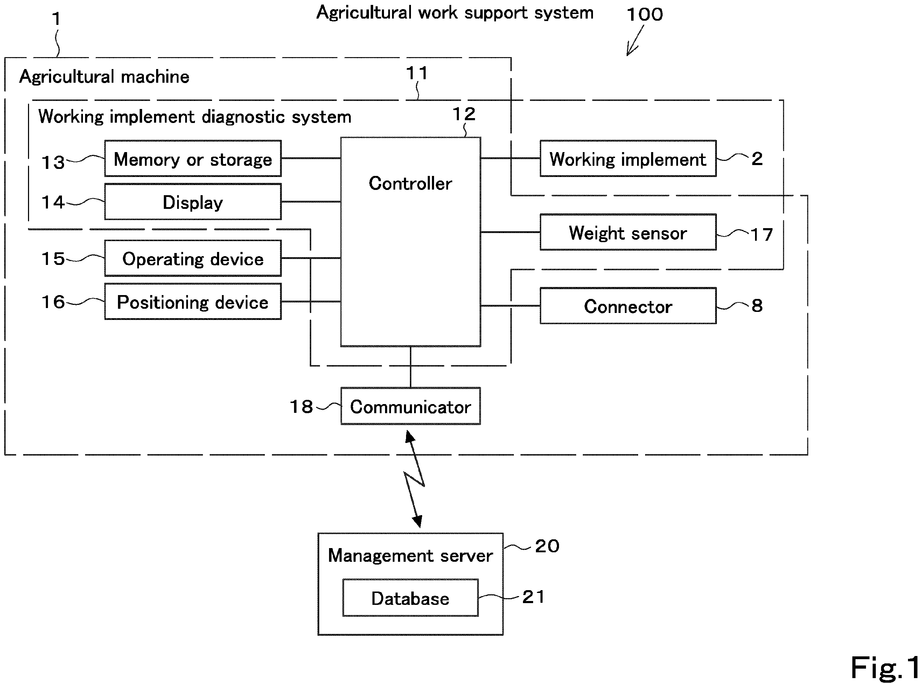

FIG. 1 illustrates an electrical configuration of an agricultural work support system 100. The agricultural work support system 100 is a system for supporting agricultural works. The agricultural work support system 100 includes a working implement diagnostic system 11, the agricultural machine 1, and a management server 20.

The working implement diagnostic system 11 is a system for diagnosing the working implement 2 connected to the agricultural machine 1. The working implement diagnostic system 11 is installed in the agricultural machine 1. The working implement diagnostic system 11 diagnoses a condition of the working implement 2 about work thereby and/or operation thereof based on, for example, a change in the weight of the working implement 2. The working implement diagnostic system 11 includes a controller 12, a memory or storage 13, a display 14, a weight sensor 17, and the working implement 2. In the working implement diagnostic system 11, the diagnosis of the condition of the working implement about work thereby and/or operation thereof is performed by the controller 12 as described later.

The agricultural machine 1 includes the working implement diagnostic system 11, the connector 8, an operating device 15, a positioning device 16, and a communicator 18. In other examples, the connector 8, the operating device 15, the positioning device 16, and the communicator 18 may be provided in the working implement diagnostic system 11, and/or the working implement 2 may be provided in the agricultural machine 1.

The controller 12 is configured as an electronic control unit (ECU) including a central processing unit (CPU) (or microcomputer) and a memory. The controller 12 is a controller to control the agricultural machine 1 and the working implement diagnostic system 11. The internal memory of the controller 12 includes a volatile memory and a nonvolatile memory. The memory or storage 13 includes a volatile memory and a nonvolatile memory. The internal memory of the controller 12 and the memory or storage 13 store control data for controlling the individual components using the controller 12 in a readable and writable manner.

The display 14 is configured as, for example, a touch panel. The display 14 displays various kinds of information. In addition, various kinds of information can be input by performing predetermined operations on a display screen of the display 14. The operating device 15 includes, for example, various operation members such as switches, keys, handles, levers, and pedals for separately operating the agricultural machine 1 and the working implement 2, and sensors and electrical circuits for outputting signals corresponding to the operating statuses of the operation members. The display 14 and the operating device 15 are input interfaces.

The positioning device 16 is installed in the traveling machine body 3 of the agricultural machine 1. The positioning device 16 detects the present position (for example, latitude and longitude) based on satellite signals by receiving satellite signals (for example, positions of positioning satellites, transmission time, and correction information) transmitted from satellite positioning systems (positioning satellites), such as D-GPS, GPS, GLONASS, Hokuto, Galileo, and Michibiki. This means that the positioning device 16 operates as a position detector that detects the position of the traveling machine body 3 of the agricultural machine 1. The controller 12 calculates the position of the working implement 2 based on the position of the traveling machine body 3 detected by the positioning device 16 and the position of the working implement 2 relative to the traveling machine body 3.

The communicator 18 includes an antenna and an electrical circuit for wirelessly communicating with the management server 20 via public communication networks such as the Internet. The management server 20 is provided outside the agricultural machine 1. A database 21 is implemented on the management server 20. The database 21 of the management server 20 stores various kinds of information for supporting agricultural work performed by the agricultural machine 1 and the working implement 2. The controller 12 communicates with the management server 20 through the communicator 18 to transmit and receive information and data to and from the management server 20. The communicator 18 is a communication interface and an input interface. For example, agricultural personnel can access the management server 20 using terminal devices such as personal computers (PCs), smartphones, or tablet computers and view various kinds of information stored in the database 21.

The weight sensor 17 detects the weight of the working implement 2 connected to the traveling machine body 3. Specifically, the weight sensor 17 includes, for example, a load sensor installed in the connector 8 and an arithmetic logic unit (details not illustrated). The load sensor detects the load applied to the connector 8 from the working implement 2 and outputs a detection signal corresponding to the load. The arithmetic logic unit calculates the weight of the working implement 2 based on the detection signal from the load sensor.

The connector 8 includes a control valve (not illustrated) to extend and retract the lift cylinders 8e. The control valve is a solenoid valve that is operable based on a control signal (electrical signal) input from the controller 12. A hydraulic pump (not illustrated) provided in the agricultural machine 1, the control valve, and the lift cylinders 8e are connected to each other by one or more fluid passages (not illustrated) through which hydraulic fluid delivered from the hydraulic pump flows. The controller 12 adjusts the hydraulic pressure of the hydraulic fluid supplied from the control valve to the lift cylinders 8e by electrically controlling the switching position or opening of the control valve 36 to extend and retract the lift cylinders 8e.

The working implement diagnostic system 11 (the controller 12) diagnoses the working implement 2 based on a change in the weight of the working implement 2 detected by the weight sensor 17. Specifically, the controller 12 diagnoses the condition of the working implement 2 about work thereby and/or operation thereof based on the change in the weight of the working implement 2. When the working implement 2 is of the cultivation/soil preparation class, such as cultivators, shallow tillage machines, ridgers, or soil disturbance machines, the working implement diagnostic system 11 (the controller 12) diagnoses the condition about the work such as cultivation or soil preparation based on the change in the weight of the working implement 2. When the working implement 2 is of the spreading/planting class, such as spreaders, transplanters, or sowing machines, the working implement diagnostic system 11 (the controller 12) diagnoses the condition about the work such as spreading or planting based on the change in the weight of the working implement.

Regardless of whether the working implement 2 is of the cultivation/soil preparation or spreading/planting class, the working implement diagnostic system 11 (the controller 12) diagnoses the condition of the working implement 2 about the operation thereof based on the change in the weight of the working implement 2. For example, when the working implement 2 is of the cultivation/soil preparation class, in the case in which the weight of the working implement 2 indicates a decreasing trend after the start of ground work, and the decrease in weight becomes greater than or equal to a predetermined threshold, the working implement diagnostic system 11 (the controller 12) may diagnose that damage or a fault in components/equipment for cultivation/soil preparation is occurring and the working implement 2 is not operating properly. When the working implement 2 is of the spreading/planting class, in the case in which the weight of the working implement 2 has not been decreasing after the start of ground work, and the decrease in weight is smaller than a threshold, the working implement diagnostic system 11 (the controller 12) may diagnose that a fault in components/equipment for spreading/planting is occurring and the working implement 2 is not operating properly. When the trend and amount of change in the weight of the working implement 2 are opposite of the trend and amount described above, the working implement diagnostic system 11 (the controller 12) may diagnose that the working implement 2 is operating properly.

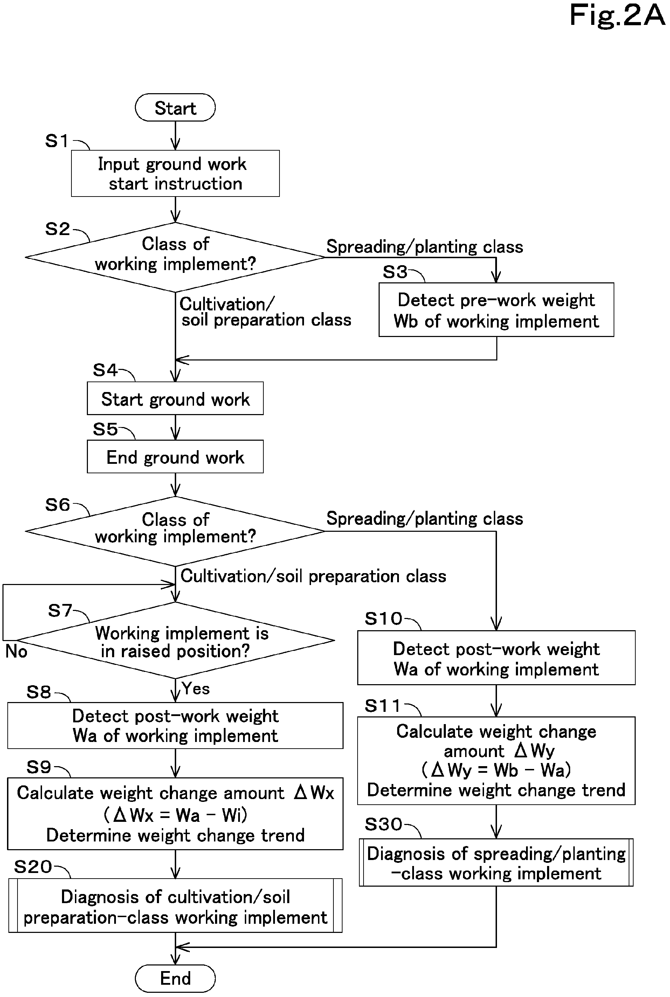

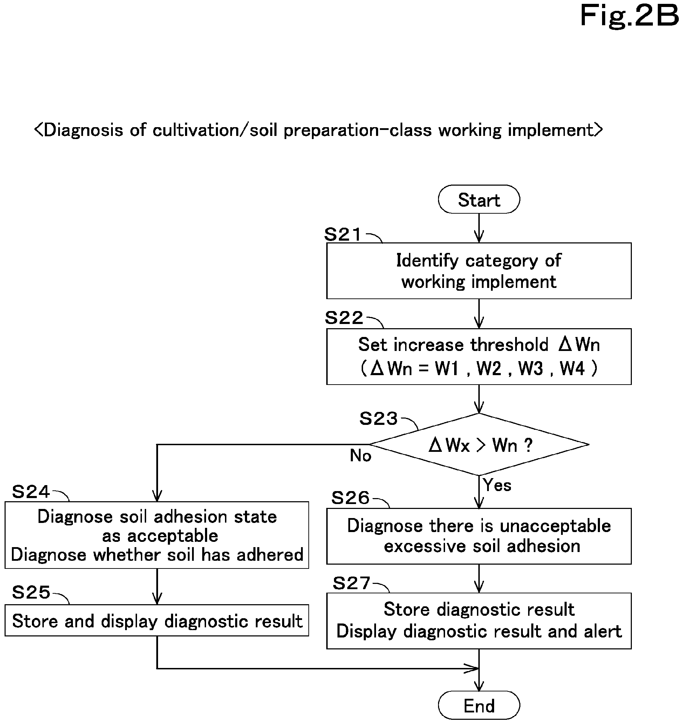

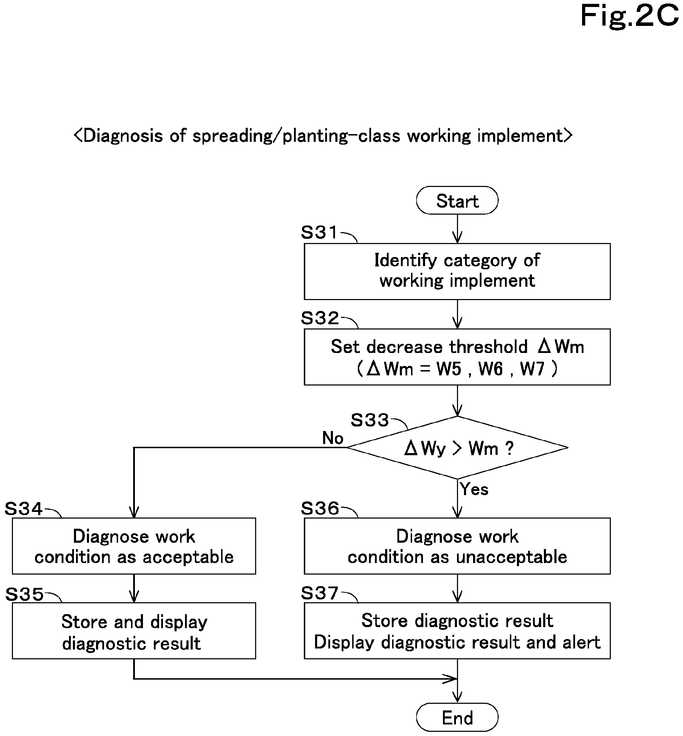

FIG. 2A is a flowchart illustrating an example of a diagnostic operation of the working implement diagnostic system 11. The individual steps in FIG. 2A are executed by the controller 12 according to a software program stored in the internal memory. The same applies to the individual steps in FIGS. 2B and 2C described later.

For example, when the agricultural machine 1 is located in the agricultural field H, and a start switch (not illustrated) included in the operating device 15 is turned on, the controller 12 determines that a work start instruction has been input (S1 in FIG. 2A). Alternatively, for example, when the controller 12 receives a work start signal transmitted from a remote controller (not illustrated) that remotely controls the agricultural machine 1 and the working implement 2 via the communicator 18, the controller 12 may determine that a work start instruction has been input. The method of inputting a work start instruction is not limited to the methods described above.

When a work start instruction is input, the controller 12 checks the class of the working implement 2 connected to the traveling machine body 3 (S2). At this time, for example, the controller 12 may identify the class (and category) of the working implement 2 based on information regarding the working implement 2, inputted in advance using the display 14 or the operating device 15 and stored in the internal memory or the memory or storage 13. Alternatively, the controller 12 may detect the weight of the working implement 2 in the raised position P2 or P3 using the weight sensor 17, identify the category of the working implement 2 based on the weight, and determine the class based on the category. Alternatively, the controller 12 may obtain information indicating the type of the working implement 2 from a CPU or memory included in the working implement 2 and identify the class (and category) of the working implement 2 based on the information. The method of checking the class (and category) of the working implement 2 is not limited to the methods described above.

When the working implement 2 is a spreading/planting-class working implement, such as a spreader, transplanter, or sowing machine, which consumes (provides for the agricultural field H) materials such as fertilizers, chemicals, seedlings, or seeds (S2: spreading/planting class), the controller 12 detects, as a pre-work weight Wb (S3), the weight of the working implement 2 in the raised position P2 or P3 using the weight sensor 17, and stores the pre-work weight Wb in the internal memory or the memory or storage 13. At this time, the working implement 2 is loaded with work materials. After the detection of the pre-work weight Wb, the working implement 2 starts ground work with the traveling machine body 3 traveling in the agricultural field H (S4).

When the working implement 2 is a cultivation/soil preparation-class working implement, such as a cultivator, shallow tillage machine, ridger, or soil disturbance machine, which performs cultivation or soil preparation without consuming materials (S2: cultivation/soil preparation class), the controller 12 does not detect the weight of the working implement 2, and the working implement 2 starts ground work with the traveling machine body 3 traveling in the agricultural field H (S4).

Ground work may be performed through the automated operation of the agricultural machine 1 and the working implement 2 controlled by the controller 12 or the manual operation of the agricultural machine 1 and the working implement 2 operated by the operator. Alternatively, ground work may be performed through automatic steering of the agricultural machine 1 by the controller 12, manual driving of the agricultural machine 1 by the operator, and automatic or manual (semi-automatic) operation of the working implement 2.

Subsequently, when ground work ends (S5), for example, when the agricultural machine 1 and the working implement 2 stop for a predetermined time, the controller 12 checks the class of the working implement 2 (S6). When the working implement 2 is a cultivation/soil preparation-class working implement (S6: cultivation/soil preparation class), the controller 12 verifies that the working implement 2 is positioned in the raised position P2 (YES in S7 in FIG. 2B) and detects the current weight of the working implement 2 as a post-work weight Wa using the weight sensor 17 (S8).

When the working implement 2 is positioned in the lowered position P1 (NO in S7), the controller 12 positions the working implement 2 in the raised position P2 using the connector 8 (YES in S7) and then detects the post-work weight Wa of the working implement 2 using the weight sensor 17 (S8).

Next, the controller 12 calculates a change amount ΔWx in the weight of the working implement 2 and determines the trend of weight change in the working implement 2 (S9). At this time, the controller 12 calculates the change amount ΔWx by subtracting an initial weight Wi of the working implement 2 stored in advance in the internal memory (which may be the memory or storage 13) from the post-work weight Wa of the working implement 2 (Wa - Wi = ΔWx). In other words, the change amount ΔWx is the difference between the post-work weight Wa and the initial weight Wi of the working implement 2. The initial weight Wi is, for example, the weight of the working implement 2 detected by the weight sensor 17 when the working implement 2 (a cultivation/soil preparation-class working implement) is connected to the traveling machine body 3 by the connector 8, and stored in, for example, the internal memory of the controller 12. This means that the initial weight Wi is the weight of the working implement 2 (a cultivation/soil preparation-class working implement) before performing ground work. As the trend of weight change in the working implement 2, the controller 12 determines whether the post-work weight Wa has increased or remains equal to the initial weight Wi.

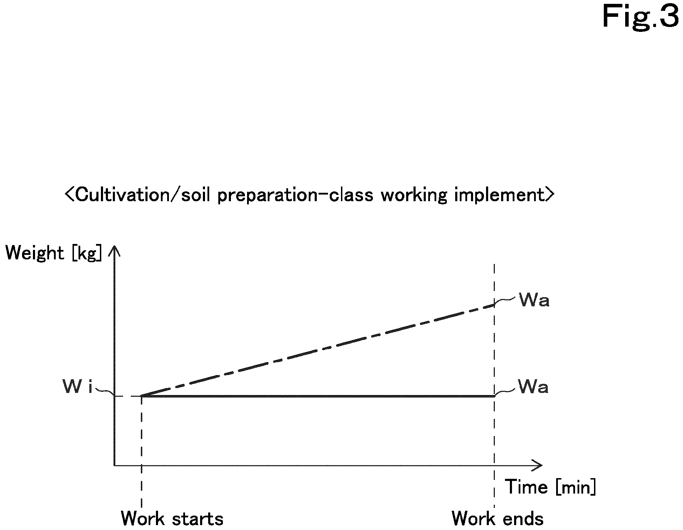

FIG. 3 is a graph illustrating an example of weight change in a cultivation/soil preparation-class working implement 2. In FIG. 3, the horizontal axis represents time, and the vertical axis represents the weight of the working implement 2. The cultivation/soil preparation-class working implement 2 performs ground work such as cultivation or soil preparation with ground work members such as the cultivation claws 2g in contact with the soil. As a result, when the working implement 2 performs ground work and soil adheres to the ground work members or other members, the post-work weight Wa of the working implement 2 increases compared to the initial weight Wi, as illustrated by the thick dot-dash line in FIG. 3. As the amount of soil adhered to the ground work members or other members increases, the post-work weight Wa increases. By contrast, when little to no soil adheres to the ground work members or other members, the post-work weight Wa of the working implement 2 remains substantially equal to the initial weight Wi, as illustrated by the thick solid line in FIG. 3.

When soil adheres to the cultivation/soil preparation-class working implement 2 and the weight of the working implement 2 increases, the load on the working implement 2 and the agricultural machine 1 connected to the working implement 2 increases. In particular, when the weight of the working implement 2 reaches or exceeds the rated weight, excessive loads are placed on the working implement 2 and the agricultural machine 1. When the working implement 2 and the agricultural machine 1 are maintained in operation under such excessive loads, the working implement 2 and the agricultural machine 1 are prone faults, resulting in improper execution of ground work. For this reason, there is a demand to monitor the condition of the working implement 2 to ensure appropriate maintenance of the working implement 2, such as removing soil from the working implement 2.

With consideration of such a demand, in the working implement diagnostic system 11, after step S9 in FIG. 2A, the controller 12 diagnoses the cultivation/soil preparation-class working implement 2 based on the change amount ΔWx and the trend in the weight change of the working implement 2 (S20).

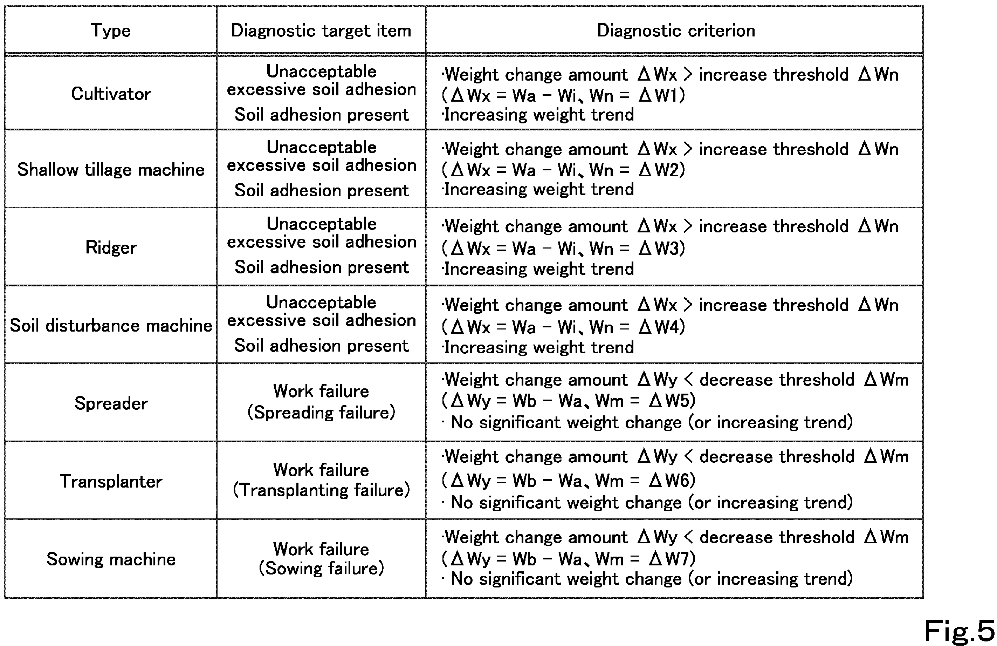

FIG. 2B is a flowchart illustrating the details of step S20 of diagnosing the cultivation/soil preparation-class working implement 2 in FIG. 2A. FIG. 5 presents an example of the relationship between the type of working implement 2, the diagnostic target item, and the diagnostic criteria. The information in the table illustrated in FIG. 5 is stored in advance in the memory or storage 13 as control information for diagnosis. The controller 12 diagnoses the working implement 2 related to the diagnostic target items corresponding to the type of the working implement 2 by comparing the change amount and trend of the weight change in the working implement 2 with the diagnostic criteria corresponding to the type of the working implement 2 in the control information presented in FIG. 5.

In FIG. 2B, the controller 12 first identifies the category of the working implement 2 (S21) and sets an increase threshold ΔWn corresponding to the category of the working implement 2 (S22). At this time, the controller 12 identifies the category of the cultivation/soil preparation-class working implement 2, specifically determining whether the working implement 2 is, for example, a cultivator, shallow tillage machine, ridger, or soil disturbance machine. For example, as illustrated in FIG. 5, when the working implement 2 is a cultivator, the controller 12 sets a predetermined value ΔW1 as (determined as) the increase threshold ΔWn; when the working implement 2 is a shallow tillage machine, the controller 12 sets a predetermined value ΔW2 as the increase threshold ΔWn; when the working implement 2 is a ridger, the controller 12 sets a predetermined value ΔW3 as the increase threshold ΔWn; and when the working implement 2 is a soil disturbance machine, the controller 12 sets a predetermined value ΔW4 as the increase threshold ΔWn.

Next, the controller 12 compares the change amount ΔWx of the weight of the working implement 2 with the increase threshold ΔWn corresponding to the category of the working implement 2. When the change amount ΔWx is smaller than or equal to the increase threshold ΔWn (NO in S23), the controller 12 diagnoses that the soil adhesion state of the working implement 2 is acceptable (the amount of soil adhesion is small). The controller 12 executes a diagnosis of (determines) whether soil has adhered to the working implement 2 based on the trend of weight change in the working implement 2 (S24).

Specifically, the controller 12 diagnoses that the soil adhesion state in the working implement 2 is acceptable because the comparison result in which the change amount ΔWx is smaller than or equal to the increase threshold ΔWn does not meet the determination criteria for the cultivation/soil preparation-class working implement 2 (for example, a cultivator, shallow tillage machine, ridger, or soil disturbance machine) in FIG. 5. For example, when the post-work weight Wa of the working implement 2 exceeds the initial weight Wi, the controller 12 determines that the post-work weight Wa indicates an increasing trend relative to the initial weight Wi. This determination result meets the determination criteria for the cultivation/soil preparation-class working implement 2 in FIG. 5, and the controller 12 accordingly diagnoses that the working implement 2 has soil adhesion. When the post-work weight Wa of the working implement 2 is equal to the initial weight Wi, or when the change amount ΔWx is smaller than or equal to a predetermined value that is less than the increase threshold ΔWn, the controller 12 determines that the post-work weight Wa of the working implement 2 indicates a trend in which the post-work weight Wa is substantially equal to the initial weight Wi and diagnoses that the working implement 2 has no soil adhesion (or no significant soil adhesion).

Subsequently, the controller 12 stores the result of diagnosing the working implement 2 (diagnostic result for the working implement 2) in the memory or storage 13 and causes the display 14 to display the diagnostic result (S25). At this time, the controller 12 may store information indicating the post-work weight Wa of the working implement 2, the change amount ΔWx of the weight of the working implement 2, and the trend of change (in this case, the weight of the working implement 2 indicates an insignificant (not excessive or abnormal) increasing trend or the weight of the working implement 2 has not changed) in the memory or storage 13 and causes the display 14 to display the information. The controller 12 may cause the display 14 to display the diagnostic result for the working implement 2 after verifying, based on the detection result from the positioning device 16, that the agricultural machine 1 and the working implement 2 are still located in the agricultural field H where the agricultural machine 1 and the working implement 2 have performed ground work (the same applies to the display in step S27 and steps S35 and S37 in FIG. 2C, which will be described later).

When the change amount ΔWx of the weight of the working implement 2 exceeds the increase threshold ΔWn (YES in S23), the controller 12 diagnoses the soil adhesion state in the working implement 2 as unacceptable excessive adhesion (S26). Specifically, the controller 12 diagnoses that the working implement 2 indicates unacceptable excessive soil adhesion because the comparison result in which the change amount ΔWx exceeds the increase threshold ΔWn meets the determination criteria for the cultivation/soil preparation-class working implement 2 (for example, a cultivator, shallow tillage machine, ridger, or soil disturbance machine) in FIG. 5.

Subsequently, the controller 12 stores the result of diagnosing the working implement 2 in the memory or storage 13 and causes the display 14 to display the diagnostic result and an alert indicating that the amount of soil adhesion and the weight of the working implement 2 are excessive (S27). At this time, the controller 12 may also store, for example, the post-work weight Wa and the change amount ΔWx of the weight of the working implement 2 and a message prompting the removal of soil from the working implement 2 in the memory or storage 13 and cause the display 14 to display the information.

In FIG. 2A, after ground work ends (S5), when the controller 12 identifies the working implement 2 as a spreading/planting-class working implement (S6: spreading/planting class), the controller 12 detects the current weight of the working implement 2 as the post-work weight Wa using the weight sensor 17 (S10).

Next, the controller 12 calculates a change amount ΔWy in the weight of the working implement 2 and identifies the trend of weight change in the working implement 2 (S11). At this time, the controller 12 calculates the change amount ΔWy by subtracting the post-work weight Wa from the pre-work weight Wb of the working implement 2 detected in step S3 (Wb - Wa = ΔWy). In other words, the change amount ΔWy is the difference between the pre-work weight Wb and the post-work weight Wa of the working implement 2. As the trend of weight change in the working implement 2, the controller 12 determines whether the post-work weight Wa has increased or remains substantially equal to (has not changed from) the pre-work weight Wb.

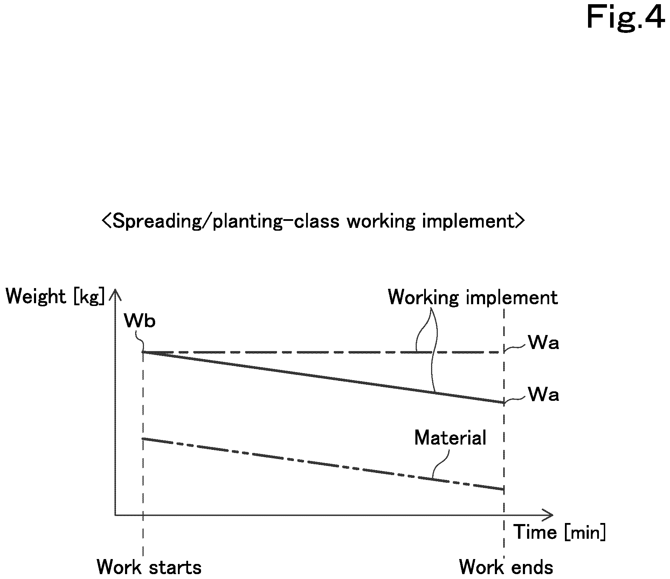

FIG. 4 is a graph illustrating an example of weight change in a spreading/planting-class working implement 2. In FIG. 4, the horizontal axis represents time, and the vertical axis represents the weight of the working implement 2. The spreading/planting-class working implement 2 performs ground work such as spreading or planting while consuming (providing the agricultural field H with) materials such as fertilizers, chemicals, seedlings, or seeds. As a result, when the working implement 2 performs ground work and the material loaded in or on the working implement 2 decreases as illustrated by the thick two-dot-dash line in FIG. 4, the post-work weight Wa of the working implement 2 decreases compared to the pre-work weight Wb, as illustrated by the thick solid line in FIG. 4. As the work time increases, material consumption increases, and as a result, the post-work weight Wa of the working implement 2 decreases. As the amount of material (spreading amount and planting amount) provided to the agricultural field H increases, material consumption also increases, and as a result, the post-work weight Wa of the working implement 2 decreases. When little to no material is consumed (provided to the agricultural field H) due to an abnormality (defect) in the working implement 2, the post-work weight Wa of the working implement 2 remains substantially equal to the pre-work weight Wb (no significant change), as illustrated by the thick dot-dash line in FIG. 4.

Regarding the spreading/planting-class working implement 2, there is a demand to monitor the condition of the working implement 2 to ensure appropriate maintenance of the working implement 2. For this reason, in the working implement diagnostic system 11, after step S11 in FIG. 2A, the controller 12 diagnoses the spreading/planting-class working implement 2 based on the change amount ΔWy and the trend in the weight change of the working implement 2 (S30).

FIG. 2C is a flowchart illustrating the details of step S30 of diagnosing the spreading/planting-class working implement 2 in FIG. 2A. In FIG. 2C, the controller 12 first identifies the category of the working implement 2 (S31) and sets a decrease threshold ΔWm corresponding to the category of the working implement 2 (S32). At this time, for example, when the working implement 2 is a spreader, the controller 12 multiplies the consumption (spreading amount) per unit time of the material such as a fertilizer or chemical, by the operating time of the working implement 2 for which ground work has been performed (the operating time of the working implement 2 from the start of ground work in step S4 to the end of ground work in step S5 in FIG. 2A) to calculate a multiplication value as a theoretical consumption of the material. The controller 12 further subtracts a predetermined margin value from the theoretical consumption to obtain a subtraction value ΔW5 and sets the subtraction value ΔW5 as the decrease threshold ΔWm.

Also when the working implement 2 is, for example, a transplanter or sowing machine, the controller 12 multiplies the consumption (planting amount) per unit time of the material such as seedling or seeds, by the operating time of the working implement 2 for which ground work has been performed to calculate a multiplication value as a theoretical consumption of the material. The controller 12 further subtracts a predetermined margin value from the theoretical consumption to obtain a subtraction value ΔW6 or ΔW7 and sets the subtraction value ΔW6 or ΔW7 as the decrease threshold ΔWm. In another example, the subtraction of the margin value from the theoretical consumption may be omitted, and the theoretical consumption may be set as the decrease threshold ΔWm (= ΔW5, ΔW6, ΔW7). The method of setting (calculating) the decrease threshold ΔWm is not limited to the methods described above.

Next, the controller 12 compares the change amount ΔWy of the weight of the working implement 2 with the decrease threshold ΔWm corresponding to the category of the working implement 2. When the change amount ΔWy is equal to or greater than the decrease threshold ΔWm (NO in S33), because the material is properly consumed and the weight of the working implement 2 has decreased, the controller 12 diagnoses that the work condition of the working implement 2 (i.e., the condition of the working implement 2 about work thereby) is acceptable (S34). Specifically, the controller 12 diagnoses that the work condition (for example, spreading state, transplanting state, or sowing state) of the working implement 2 is acceptable because the comparison result in which the change amount ΔWy of the weight of the working implement 2 is greater than or equal to the decrease threshold ΔWm does not meet the determination criteria for the spreading/planting-class working implement 2 (for example, a spreader, transplanter, or sowing machine) in FIG. 5.

Alternatively, since the change amount ΔWy is greater than or equal to the decrease threshold ΔWm (NO in S33), it is assumed that the material has been properly consumed and the working implement 2 has operated properly to perform ground work, the controller 12 may diagnose that the work operation (for example, spreading operation, transplanting operation, or sowing operation) of the working implement 2 (i.e., the condition of the working implement 2 about operation thereof) is acceptable, in addition to or instead of the work condition of the working implement 2, in step S34. The "work operation" of the working implement 2 may be regarded as "whether operation is performed", and in step S34, the controller 12 may provide a diagnosis determining that "normal operation is performed" (or simply "operation is performed") by the working implement 2.

Subsequently, the controller 12 stores the diagnostic result for the working implement 2 in the memory or storage 13 and causes the display 14 to display the diagnostic result (S35). At this time, the controller 12 may also store, for example, the post-work weight Wa and the change amount ΔWy of the weight of the working implement 2 and the change trend (in this case, the weight of the working implement 2 indicates a decreasing trend) in the memory or storage 13 and causes the display 14 to display the information.

When the change amount ΔWy of the weight of the working implement 2 is smaller than the decrease threshold ΔWm (YES in S33), because the material is not properly consumed, the controller 12 diagnoses that the work condition of the working implement 2 is unacceptable (S36). Specifically, the controller 12 diagnoses that the work condition of the working implement 2 is unacceptable (for example, spreading failure, transplanting failure, or sowing failure) because the comparison result in which the change amount ΔWy is smaller than the decrease threshold ΔWm meets the determination criteria for the spreading/planting-class working implement 2 (for example, a spreader, transplanter, or sowing machine) in FIG. 5.

Alternatively, since the change amount ΔWy is smaller than the decrease threshold ΔWm (YES in S33), it is assumed that the material has not been properly consumed and the working implement 2 has not operated properly to perform ground work, the controller 12 may diagnose that the work operation performed by the working implement 2 is unacceptable (or "no normal operation" or simply "no operation" performed by the working implement 2), in addition to or instead of the work condition of the working implement 2, in step S36. When the working implement 2 is a spreader or sowing machine, the controller 12 may more specifically diagnose the work operation of the working implement 2 as " the working implement 2 is clogged with the material." to indicate that the work operation of the working implement 2 is unacceptable.

Subsequently, the controller 12 stores the diagnostic result for the working implement 2 in the memory or storage 13 and causes the display 14 to display the diagnostic result and an alert indicating that the work condition of the working implement 2 is unacceptable (S37). At this time, the controller 12 may store, for example, the post-work weight Wa of the working implement 2, the change amount ΔWy of the weight of the working implement 2, the change trend (in this case, the weight of the working implement 2 indicates no significant change or an increasing trend), and a message prompting maintenance of the working implement 2 in the memory or storage 13 and causes the display 14 to display these kinds of information.

After the diagnosis of the working implement 2 described above, the controller 12 reads the diagnostic result for the working implement 2 stored in the memory or storage 13 in steps S25 and S27 in FIG. 2B and steps S35 and S37 in FIG. 2C at a predetermined timing and transmits the diagnostic result to the management server 20 using the communicator 18. The management server 20 receives the diagnostic result for the working implement 2 and stores the diagnostic result in the database 21.

In the embodiment described above, an example was provided in which, after the controller 12 verifies that an instruction to start ground work has been input (S1 in FIG. 2A), the controller 12 detects the pre-work weight Wb of the spreading/planting-class working implement 2 using the weight sensor 17 (S3). However, the present invention is not limited to this example, and the operation of verifying the input of an instruction to start ground work (S1) may be omitted. In this case, for example, when the controller 12 detects, for example using the positioning device 16, that the traveling machine body 3 and the working implement 2 are stopped at the start position for ground work in the agricultural field H, and also detects, using a switch or sensor, that the material has been loaded in the spreading/planting-class working implement 2, the controller 12 may detect the pre-work weight Wb of the spreading/planting-class working implement 2 using the weight sensor 17.

In the embodiment described above, an example is presented in which, after the controller 12 diagnoses the working implement 2 as acceptable (S24 in FIG. 2B and S34 in FIG. 2C), the controller 12 causes the display 14 to display the diagnostic result (25 in FIG. 2B and S35 in FIG. 2C). However, the operation of displaying the diagnostic result indicating acceptable may be omitted.

In the embodiment described above, an example is presented in which the controller 12 diagnoses the soil adhesion state for the working implement 2 of the cultivation/soil preparation class, and the work condition for the working implement 2 of the spreading/planting class. However, the present invention is not limited to this example, and the controller 12 may diagnose the working implement 2 with respect to other diagnostic target items. For example, when the weight of the cultivation/soil preparation-class working implement 2 indicates a decreasing trend, the controller 12 may diagnose, for example, that there is damage to components. For the spreading/planting-class working implement 2, when the weight of the working implement 2 decreases by more than the amount of loaded material, the controller 12 may diagnose, for example, that there is damage to components.

In the embodiment described above, an example is presented in which a diagnosis is provided after the working implement 2 is identified as the cultivation/soil preparation class or the spreading/planting class. However, the present invention is not limited to this example. For example, for working implements that perform cultivation while spreading materials such as fertilizers, a diagnosis may be provided for both spreading failure and unacceptable soil adhesion based on changes in weight. This means that a diagnosis of the working implement 2 may be provided for multiple diagnostic target items.

In the embodiment described above, an example is presented in which an alert indicating unacceptable excessive soil adhesion or, for example, an unacceptable work condition (including work operation, operating condition) of the working implement 2 is displayed by the display 14. However, the present invention is not limited to this example. For example, the alert may be provided to the surroundings of the traveling machine body 3 through sound or light using, for example, a buzzer, speaker, or warning light provided in the agricultural machine 1.

The working implement diagnostic system 11, the agricultural machine 1, and the agricultural work support system 100 of the present embodiment described above are provided with the following configurational features, achieving advantageous effects.

A working implement diagnostic system 11 of the present embodiment includes a weight sensor 17 to detect a weight of a working implement 2 that performs ground work, the working implement 2 being connected to a traveling machine body 3 of an agricultural machine 1 that travels in an agricultural field H, and a controller 12 to diagnose the working implement 2 based on a change in the weight of the working implement 2 detected by the weight sensor 17.

The agricultural machine 1 of the present embodiment includes the working implement diagnostic system 11, the traveling machine body 3 to travel in the agricultural field H, and a connector 8 to connect the working implement 2 to the traveling machine body 3.

An agricultural work support system 100 of the present embodiment includes the working implement diagnostic system 11, the agricultural machine 1 equipped with the working implement diagnostic system 11, and a management server 20 including a database 21 that is accessible from outside. The agricultural machine 1 includes, as well as the traveling machine body 3 and the connector 8, a communicator 18 to wirelessly communicate with the management server 20. The controller 12 included in the working implement diagnostic system 11 is configured or programmed to transmit a diagnostic result for the working implement 2 to the management server 20 via the communicator 18. The management server 20 is configured or programmed to receive the diagnostic result for the working implement 2 and store the diagnostic result in the database 21.

With the configuration described above, the controller 12 diagnoses the working implement 2 based on a change in the weight of the working implement 2 detected by the weight sensor 17. As a result, there is no need to provide a separate sensor in addition to the weight sensor 17, enabling the detection of whether the condition of the working implement 2 is acceptable or unacceptable with a simple configuration. For example, an individual such as an operator of the agricultural machine 1, an administrator of the agricultural machine 1 and the working implement 2, or a manager of the agricultural field H who carries out ground work using the agricultural machine 1 and the working implement 2 can obtain a diagnostic result for the working implement 2, stored in the database 21 of the management server 20, through a terminal device used by the individual. Based on the diagnostic result, the individual can monitor the condition of the working implement 2 to appropriately maintain the working implement 2, improve soil quality by monitoring the condition of the agricultural field H, or consider the plan for ground work. Similarly, for example, the manufacturer of the working implement 2 can obtain the diagnostic result for the working implement 2 from the management server 20 through the terminal device and use the diagnostic result for improvement and development of the working implement 2.

In the present embodiment, the controller 12 is configured or programmed to, based on the change in the weight of the working implement 2, diagnose a condition of the working implement 2 about work thereby and/or operation thereof. This configuration enables the detection of whether the condition of the working implement 2 about work thereby and/or operation thereof is acceptable or unacceptable when ground work is performed using the working implement 2.

In the present embodiment, the controller 12 is configured or programmed to diagnose, based on a result of comparing the change in the weight of the working implement 2 with a diagnostic criterion for a diagnostic target item corresponding to a type of the working implement 2, the condition of the working implement 2 about work thereby and/or operation thereof related to the diagnostic target item. For example, when ground work is performed using the working implement 2, this configuration enables the detection of whether the condition of the working implement 2 about work thereby and/or operation thereof related to the diagnostic target item corresponding to the type of the working implement 2 is acceptable or unacceptable.

In the present embodiment, the controller 12 is configured or programmed to execute a determination of whether a change trend of the weight of the working implement 2 meets a predetermined trend of the diagnostic criteria, and diagnose, based on the result of the determination, whether the condition of the working implement 2 related to the diagnostic target item corresponding to the type of the working implement 2 is acceptable or unacceptable. This configuration enables the detection of whether the condition of the working implement 2 related to the diagnostic target item corresponding to the type of the working implement 2 is acceptable or unacceptable.

In the present embodiment, the controller 12 is configured or programmed to calculate a difference between the weight of the working implement 2 before performing the ground work and the weight of the working implement 2 after performing the ground work, and diagnose, based on a result of comparing the difference with a predetermined value included in the diagnostic criterion, whether the condition of the working implement 2 related to the diagnostic target item corresponding to the type of the working implement 2 is acceptable or unacceptable. This configuration enables the detection of whether the condition of the working implement 2, after ground work, related to the diagnostic target items corresponding to the type of the working implement 2 is acceptable or unacceptable.

In the present embodiment, the controller 12 is configured or programmed to, when the working implement 2 is a type of working implement 2 that performs cultivation or soil preparation in the agricultural field H, diagnose a soil adhesion state of the working implement 2. This configuration enables the detection of whether the soil adhesion state of the cultivation/soil preparation-class working implement 2 is acceptable or unacceptable.

In the present embodiment, the controller 12 is configured or programmed to, when the working implement 2 is a type of working implement 2 that performs a type of work that consumes a material loaded thereon or therein, diagnose whether the condition of the working implement 2 about work thereby and/or operation thereof is acceptable or unacceptable. This configuration enables the detection of whether the work condition and/or the operation (activation) status of the working implement 2 is/are acceptable or unacceptable when ground work is performed using the spreading/planting-class working implement 2.

In the present embodiment, the controller 12 is configured or programmed to set, as a post-work weight Wa, the weight of the working implement 2 detected by the weight sensor 17 when the working implement 2 is stopped away from the soil after an end of the ground work, and detect a change between the post-work weight Wa and the weight Wi, Wb of the working implement 2 before performing the ground work. This configuration enables stable and accurate detection of the post-work weight Wa of the working implement 2 and the change between the post-work weight Wa and the weight Wi, Wb before ground work. Based on the change in the weight of the working implement 2, the working implement 2 after ground work can be accurately diagnosed.

In the present embodiment, the working implement diagnostic system 11 includes the working implement 2 and a display 14 to display a result of diagnosing the working implement 2 from the controller 12. This configuration enables individuals such as workers to check the diagnostic results for the working implement 2 displayed on the display 14 and monitor whether the condition of the working implement 2 is acceptable or unacceptable.

In the present embodiment, the controller 12 is configured or programmed to cause the display 14 to display the change in the weight of the working implement 2, and, when diagnosing the condition of the working implement 2 as unacceptable, cause the display 14 to display an alert. This configuration enables individuals such as workers to check changes in the weight of the working implement 2 and alerts displayed by the display 14 and immediately and appropriately perform maintenance on the working implement 2.

In the present embodiment, the working implement diagnostic system 11 includes a memory or storage 13 to store a result of diagnosing the working implement 2 from the controller 12. This configuration enables the memory or storage 13 to store the result of diagnosing the working implement 2, which can be used for, for example, the maintenance of the working implement 2, the improvement and development of the working implement 2, the creation of work plans, or the improvement of soil quality in the agricultural field H.

Although the present invention has been described above, the embodiments disclosed herein should be considered as examples in all respects and should not be interpreted as limiting. The scope of the present invention is indicated by the claims rather than the above descriptions, and all changes that come within the meaning and range of equivalency of the claims are therefore intended to be embraced therein.

### Reference Signs List

- 1: agricultural machine
- 2: working implement
- 3: traveling machine body
- 8: connector
- 11: working implement diagnostic system
- 12: controller
- 13: memory or storage
- 14: display
- 17: weight sensor
- 18: communicator
- 20: management server
- 21: database
- 100: agricultural work support system
- H: agricultural field
- H1: soil
- Wa: pre-work weight
- Wb: post-work weight
- Wi: initial weight

## Claims

1. A working implement diagnostic system comprising:
a weight sensor to detect a weight of a working implement that performs ground work, the working implement being connected to a traveling machine body of an agricultural machine that travels in an agricultural field; and
a controller to diagnose the working implement based on a change in the weight of the working implement detected by the weight sensor.

2. The working implement diagnostic system according to claim 1, wherein
the controller is configured or programmed to diagnose, based on the change in the weight of the working implement, a condition of the working implement about work thereby and/or operation thereof.

3. The working implement diagnostic system according to claim 2, wherein
the controller is configured or programmed to diagnose, based on a result of comparing the change in the weight of the working implement with a diagnostic criterion for a diagnostic target item corresponding to a type of the working implement, the condition of the working implement about work thereby and/or operation thereof related to the diagnostic target item.

4. The working implement diagnostic system according to claim 3, wherein
the controller is configured or programmed to execute a determination of whether a change trend of the weight of the working implement meets a predetermined trend of the diagnostic criterion, and diagnose, based on a result of the determination, whether the condition of the working implement related to the diagnostic target item is acceptable or unacceptable.

5. The working implement diagnostic system according to claim 3, wherein
the controller is configured or programmed to calculate a difference between the weight of the working implement before performing the ground work and the weight of the working implement after performing the ground work, and diagnose, based on a result of comparing the difference with a predetermined value included in the diagnostic criterion, whether the condition of the working implement related to the diagnostic target item is acceptable or unacceptable.

6. The working implement diagnostic system according to claim 3, wherein
the controller is configured or programmed to, when the working implement is a type of working implement that performs cultivation or soil preparation in the agricultural field, diagnose a soil adhesion state of the working implement.

7. The system according to claim 3, wherein
the controller is configured or programmed to, when the working implement is a type of working implement that performs a type of work that consumes a material loaded thereon or therein, diagnose whether the condition of the working implement about work thereby and/or operation thereof is acceptable or unacceptable.

8. The working implement diagnostic system according to claim 1, wherein
the controller is configured or programmed to:
set, as a post-work weight, the weight of the working implement detected by the weight sensor when the working implement is stopped away from soil after an end of the ground work; and
detect a change between the post-work weight and the weight of the working implement before performing the ground work.

9. The working implement diagnostic system according to claim 1, comprising:
the working implement; and
a display to display a result of diagnosing the working implement from the controller.

10. The working implement diagnostic system according to claim 9, wherein
the controller is configured or programmed to cause the display to display the change in the weight of the working implement, and, when diagnosing the condition of the working implement as unacceptable, cause the display to display an alert.

11. The working implement diagnostic system according to claim 1, comprising:
a memory or a storage to store a result of diagnosing the working implement from the controller.

12. An agricultural machine comprising:
the working implement diagnostic system according to any of claims 1 to 11;
a traveling machine body to travel in an agricultural field; and
a connector to connect a working implement to the traveling machine body.

13. An agricultural work support system comprising:
the working implement diagnostic system according to any of claims 1 to 11;
an agricultural machine equipped with the working implement diagnostic system; and
a management server including a database that is accessible from outside, wherein
the agricultural machine includes
a traveling machine body to travel in an agricultural field,
a connector to connect a working implement to the traveling machine body, and
a communicator to wirelessly communicate with the management server,
the controller included in the working implement diagnostic system is configured or programmed to transmit a result of diagnosing the working implement to the management server via the communicator, and
the management server is configured or programmed to receive the result of diagnosing the working implement, and store the result in the database.
